# EUROPÄISCHE PATENTANMELDUNG

(11) **EP 3 435 668 A1**
(43) Veröffentlichungstag der Anmeldung: **30.01.2019**
(21) Anmeldenummer: 18176021.6
(22) Anmeldetag: 05.06.2018
(51) Int. Cl.: H04N 7/18

(54) **KANALINSPEKTIONS- UND/ODER WARTUNGSSYSTEM**

(30) Priorität: 25.07.2017 DE 202017104428 U
(71) Anmelder: iPEK International GmbH, 87477 Sulzberg (DE)
(72) Erfinder: Kress, Michael, 87437 Kempten (DE)
(74) Vertreter: 2s-ip Schramm Schneider Bertagnoll Patent- und Rechtsanwälte Part mbB

(57) **Zusammenfassung**

Bereitgestellt wird ein Kanalinspektions- und/oder Wartungssystem mit einer Inspektions- und/oder Wartungseinheit (10) und einer Steuer- und/oder Anzeigeeinheit (20), wobei
- die Steuer- und/oder Anzeigeeinheit (20) über ein Kupferleitungen aufweisendes Twisted-Pair-Kabel (30) operativ mit der Inspektions- und/oder Wartungseinheit (10) gekoppelt ist,
- die Inspektions- und/oder Wartungseinheit (10) eine Bildaufhahmeeinheit (15) aufweist, die operativ mit einer einen digitalen Signalprozessor (DSP) oder eine anwendungsspezifische integrierte Schaltung (ASIC) aufweisenden Verarbeitungseinheit (16) der Inspektions- und/oder Wartungseinheit (10) gekoppelt ist,
- die Verarbeitungseinheit (16) operativ mit dem Twisted-Pair-Kabel (30) gekoppelt ist, und
- die Verarbeitungseinheit (16) angepasst ist
- die von der Bildaufnahmeeinheit (15) empfangenen Bilddaten gegebenenfalls zu digitalisieren und zu komprimieren,
- die digitalisierten und komprimierten Bilddaten für eine Übertragung nach dem BroadR-Reach-Standard aufzubereiten, und
- die aufbereiteten Bilddaten nach dem BroadR-Reach-Standard über das Twisted-Pair-Kabel (30) an die Steuer- und/oder Anzeigeeinheit (20) zu übertragen.

## Beschreibung

### Gebiet der Erfindung

Die Erfindung betrifft ein Kanalinspektions- und/oder Wartungssystem mit einer Inspektions- und/oder Wartungseinheit und einer Steuer- und/oder Anzeigeeinheit, wobei die Inspektions- und/oder Wartungseinheit operativ mit der Steuer- und/oder Anzeigeeinheit gekoppelt ist.

### Hintergrund der Erfindung

Zur Durchführung von Rohr- bzw. Kanalinspektionen ist es bekannt, sogenannte Kanalinspektionssysteme zu verwenden, die in das zu inspizierende Rohr bzw. Kanalrohr eingebracht werden können und im Kanalrohr verfahren werden können. Zur Wartung, etwa Reinigung, von Kanalrohren ist es bekannt, Kanalwartungssysteme zu verwenden, die Reinigungsvorrichtungen, etwa Hochdruckspüleinrichtungen aufweisen. Sowohl die Kanalinspektionssysteme als auch die Kanalwartungssysteme können Kameras und/oder Sensoren aufweisen, mit denen Bilder und Videos bzw. unterschiedliche Messdaten während der Inspektion bzw. während der Wartung erfasst werden können.

Die aufgenommenen Bilder, Videos und/oder Messdaten müssen an eine Kontrolleinrichtung bzw. Steuer- und/oder Anzeigeeinheit außerhalb des Rohr- und Kanalsystems übertragen werden, wo sie ausgewertet und gegebenenfalls weiterverarbeitet werden können. Für die Aufnahme von Bildern und Videos werden zunehmen hochauflösende Kameras (HD-Kameras) verwendet.

Die von den Kameras aufgenommenen hochauflösenden Bilder bzw. Videos (HD-Videos) können hierbei über eine Koaxialleitung oder eine Glasfaserleitung übertragen werden. Diese Leitungen befinden sich in der Regel innerhalb eines Kabels, in welchem weitere Leitungen für die Spannungsversorgung und/oder für die Datenübertragung vorhanden sein können. Bei hochauflösenden Kameras (HD-Kameras) gibt es sehr hohe Anforderungen an die Qualität der Leitungen, damit ein hochauflösendes Bild übertragen werden kann bzw. damit ein hochauflösendes Video (HD-Video) fehlerfrei und möglichst ruckelfrei übertragen wird. Die in der Kanalinspektion bzw. Kanalwartung erforderlichen Reichweiten können damit aber nicht realisiert werden. Hinzu kommt, dass die Koaxialkabel, etwa durch Verwendung von Koaxialkomponenten teuer sind und gegebenenfalls nur unter großem Aufwand repariert werden können, etwa das Ansetzen von Koaxialverbindungen. Glasfaserleitungen wiederum sind vom Laien praktisch nicht zu reparieren, sodass ein Kanalinspektions-/ oder reinigungsunternehmen eine Inspektion / Wartung bei einem Defekt der Glasfaserleitungen die Arbeiten unterbrechen oder gar abbrechen muss.

In beiden Fällen (Koaxialleitung und Glasfaserleitungen) kommt erschwerend hinzu, dass Hochgeschwindigkeitsübertagungen anfällig für Kapazitätsveränderungen im Kabel und dergleichen sind, wie sie etwa beim Verschleiß des Kabels auftreten können. Besonders in der rauen Umgebung in Kanälen werden die Kabel sehr stark beansprucht und unterliegen einem deutlich erhöhten Verschleiß.

### Aufgabe der Erfindung

Aufgabe der vorliegenden Erfindung ist es daher, die aus dem Stand der Technik bekannten Nachteile zumindest teilweise zu vermeiden und ein Kanalinspektions- und/oder Wartungssystem bereitzustellen, mit dem über große Strecken eine zuverlässige Datenübertragung, insbesondere von hochaufgelösten Videos (HD-Videos) zwischen der Inspektions- und/oder Wartungseinheit und der Steuer- und/oder Anzeigeeinheit ermöglicht wird.

### Erfindungsgemäße Lösung

Erfindungsgemäß wird diese Aufgabe mit einem Kanalinspektions- und/oder Wartungssystem nach dem unabhängigen Anspruch gelöst. Vorteilhafte Weiterbildungen und Ausgestaltungen der Erfindung sind in den abhängigen Ansprüchen angegeben.

Bereit gestellt wird demnach ein Kanalinspektions- und/oder Wartungssystem mit einer Inspektions- und/oder Wartungseinheit und einer Steuer- und/oder Anzeigeeinheit, wobei
- die Steuer- und/oder Anzeigeeinheit über ein Kupferleitungen aufweisendes Twisted-Pair-Kabel operativ mit der Inspektions- und/oder Wartungseinheit gekoppelt ist,
- die Inspektions- und/oder Wartungseinheit eine Bildaufnahmeeinheit aufweist, die operativ mit einer einen digitalen Signalprozessor (DSP) oder eine anwendungsspezifische integrierte Schaltung (ASIC) aufweisenden Verarbeitungseinheit der Inspektions- und/oder Wartungseinheit gekoppelt ist,
- die Verarbeitungseinheit operativ mit dem Twisted-Pair-Kabel gekoppelt ist, und
- die Verarbeitungseinheit angepasst ist
   - die von der Bildaufnahmeeinheit empfangenen Bilddaten gegebenenfalls zu digitalisieren und gegebenenfalls zu komprimieren,
   - die digitalisierten und komprimierten Bilddaten für eine Übertragung nach dem BroadR-Reach-Standard aufzubereiten, und
   - die aufbereiteten Bilddaten nach dem BroadR-Reach-Standard über das Twisted-Pair-Kabel an die Steuer- und/oder Anzeigeeinheit zu übertragen.

Bei den Bilddaten kann es sich um hochaufgelöste Videos (HD-Videos) bzw. hochaufgelöste Bilder.

Erfindungsgemäß wird das Videosignal also nicht direkt unkomprimiert übertragen. Vor der Übertragung wird das Videosignal digitalisiert gegebenenfalls komprimiert, was mit verschiedenen Komprimierungsverfahren bewerkstelligt werden kann. Das Komprimieren und/oder Digitalisieren wird hierbei von der Verarbeitungseinheit vorgenommen, sodass auf dem Markt erhältliche HD-Kameras zum Einsatz kommen können.

Nach der Aufbereitung der Bilddaten für eine Übertragung nach dem BroadR-Reach-Standard werden die Datenpakete gemäß dem BroadR-Reach-Standard übertragen. Es hat sich gezeigt, dass die Datenpakete nach dem BroadR-Reach-Standard über ein Kupferleitungen aufweisendes Twisted-Pair-Kabel übertragen werden können und zwar einerseits mit der erforderlichen Geschwindigkeit bzw. Bandbreite und andererseits fehlerfrei und insbesondere über die in der Kanalinspektion bzw. Kanalwartung erforderlichen Reichweiten. Damit können selbst hochaufgelöste Videos (HD-Videos) in Echtzeit und ohne Qualitätsverlust von der Inspektions- und/oder Wartungseinheit an die Steuer- und/oder Anzeigeeinheit übertragen werden. Auf teure, anfällige und schwer wartbare Koaxialleitung oder Glasfaserleitung kann so verzichtet werden, wobei dennoch Übertragungsgeschwindigkeiten von bis zu 1000 Mbit/s erreicht werden. Zudem ist ein Kupferleitungen aufweisendes Twisted-Pair-Kabel erheblich einfacher zu reparieren als Koaxial- und Glasfaserleitungen, sodass im Falle einer Beschädigung des Kabels eine Reparatur vor Ort möglich ist und Ausfallzeit erheblich reduziert werden können.

Es hat sich zudem gezeigt, dass bei der Verwendung des BroadR-Reach-Standards für die Datenübertragung die für die Übertragung der Videos erforderliche Hochgeschwindigkeitsübertagungen deutlich weniger anfällig für Kapazitätsveränderungen oder dergleichen ist. Ein gewisser Verschleiß des Kabels wirkt sich daher nicht auf die Datenübertragung aus. Erst wenn der Verschleiß des Kabels ein gewisses Maß überschreitet muss das Kabel repariert oder ausgetauscht werden. Gegenüber den aus dem Stand der Technik bekannten Lösungen kann das Kabel deutlich länger verwendet werden, bevor es repariert oder ersetzt werden muss.

Als Twisted-Pair-Kabel können ein-, zwei- und vier- oder mehrpaarige Ausführungen verwendet werden.

Besonders vorteilhaft ist es, wenn die Bildaufnahmeeinheit eine Anzahl von Bildaufnahmeeinrichtungen aufweist, die jeweils operativ mit der Verarbeitungseinheit gekoppelt sind, wobei die Verarbeitungseinheit angepasst ist
- die von der Anzahl von Bildaufnahmeeinrichtungen empfangenen Bilddaten parallel oder quasiparallel zu digitalisieren und zu komprimieren und für eine Übertragung nach dem BroadR-Reach-Standard aufzubereiten, und
- die aufbereiteten Bilddaten der Anzahl von Bildaufnahmeeinrichtungen nach dem BroadR-Reach-Standard parallel, d.h. gleichzeitig über das Twisted-Pair-Kabel an die Steuer- und/oder Anzeigeeinheit zu übertragen.

Damit können an einer Inspektionseinheit (z.B. an einem Fahrwagen) mehrere hochauflösende Videokameras angebracht werden, etwa eine nach vorne gerichtete und eine nach hinten gerichtete HD-Kamera. Dadurch wird es möglich, während eines Inspektionsvorganges den Kanal gleichzeitig aus verschiedenen Blickwinkeln zu betrachten, was eine effizientere Inspektion ermöglicht. Zudem werden Fehler, die bei der Interpretation der Videobilder entstehen können, verringert, da die Bilder der nach vorne gerichteten und der nach hinten gerichteten Kamera gleichzeitig betrachtet werden können, die Bilder also in zeitlicher Hinsicht korrekt im Bezug zueinander stehen.

Weiter ist es vorteilhaft, wenn die Inspektions- und/oder Wartungseinheit zumindest eine Sensoreinheit aufweist, die operativ mit der Verarbeitungseinheit gekoppelt ist, wobei die Verarbeitungseinheit angepasst ist, die Sensordaten für eine Übertragung nach dem BroadR-Reach-Standard aufzubereiten und die aufbereiteten Sensordaten nach dem BroadR-Reach-Standard über das Twisted-Pair-Kabel an die Steuer- und/oder Anzeigeeinheit zu übertragen.

Hierbei ist es vorteilhaft, wenn die Verarbeitungseinheit angepasst ist, die aufbereiteten Sensordaten parallel zu den Bilddaten an die Steuer- und/oder Anzeigeeinheit zu übertragen.

Eine parallele bzw. gleichzeitige Übertragung mehrerer hochaufgelöster Videos und Sensordaten über ein Twisted-Pair-Kabel und über weite Strecken wird erfindungsgemäß erst durch den Einsatz des BroadR-Reach-Standards möglich.

Die Steuer- und/oder Anzeigeeinheit kann eine einen digitalen Signalprozessor (DSP) oder eine anwendungsspezifische integrierte Schaltung (ASIC) aufweisende Sende-/Empfangseinheit aufweist, die operativ mit dem Twisted-Pair-Kabel gekoppelt ist, wobei die Sende-/Empfangseinheit angepasst ist, Daten nach dem BroadR-Reach-Standard über das Twisted-Pair-Kabel an die Verarbeitungseinheit zu übertragen und von der Verarbeitungseinheit zu empfangen. Damit wird in besonders vorteilhafter Weise eine bidirektionale Datenübertagung zwischen der Inspektions- und/oder Wartungseinheit und der Steuer- und/oder Anzeigeeinheit möglich. Damit können auch Steuerdaten und/oder Kontrolldaten von der Steuer- und/oder Anzeigeeinheit an die Inspektions- und/oder Wartungseinheit übertragen werden.

Vorteilhaft ist es ferner, wenn die Sende-/Empfangseinheit, die Verarbeitungseinheit und das Twisted-Pair-Kabel angepasst sind Daten im Vollduplexbetrieb zu übertragen. Damit kann während einer Übertragung von einem oder mehreren hochaufgelösten Videos die volle Steuerbarkeit der Inspektions- und/oder Wartungseinheit gewährleistet werden, ohne dass die Videoübertragung unterbrochen werden muss. Damit können also gleichzeitig z.B. Videodaten in eine Richtung und Steuerdaten in die andere Richtung übertragen werden.

Die Bildaufnahmeeinrichtungen können zumindest eine HD-Kamera zur Aufnahme hochaufgelöster Videobilder umfassen.

Die Inspektions- und/oder Wartungseinheit kann einen Fahrwagen und/oder ein Schiebesystem umfassen.

Mit der vorliegenden Erfindung wird es erstmals möglich mehrere hochaufgelöste Videos parallel bzw. gleichzeitig und qualitativ hochwertig in Echtzeit über lange Strecken über ein Kupferleitungen aufweisendes Twisted-Pair-Kabel zu übertragen.

### Kurzbeschreibung der Figuren

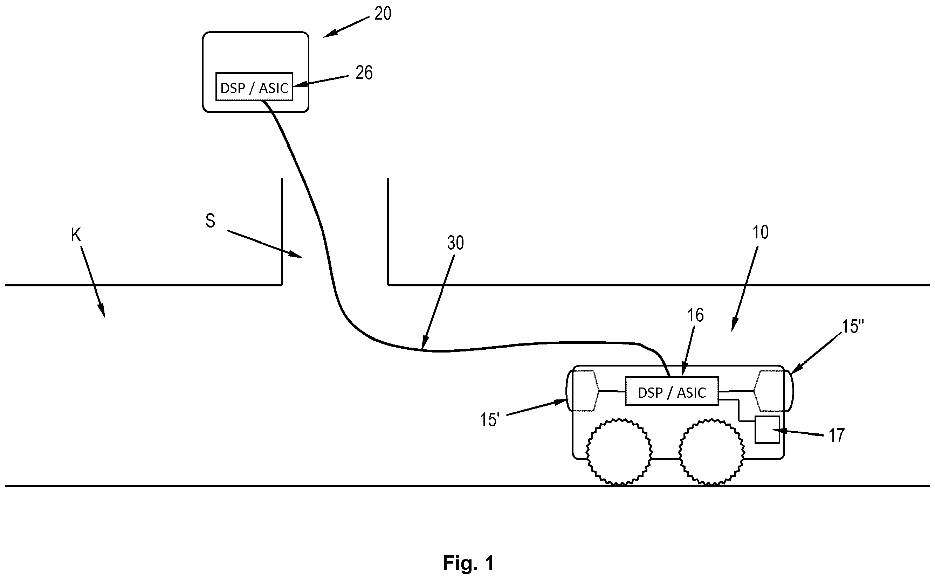

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung, wobei die einzige Fig. 1 eine schematische Darstellung des erfindungsgemäßen Kanalinspektions- und/oder Wartungssystems zeigt.

### Detaillierte Beschreibung der Erfindung

Die einzige Fig. 1 zeigt eine schematische Darstellung eines erfindungsgemäßen Kanalinspektions- und/oder Wartungssystems mit einer Inspektions- und/oder Wartungseinheit 10 und einer Steuer- und/oder Anzeigeeinheit 20.

Die Inspektions- und/oder Wartungseinheit 10 ist hier als sogenanntes Fahrwagensystem ausgestaltet, wobei an dem Fahrwagen mehrere Kamerasysteme 15', 15" und Sensoren 17 angeordnet sind. An dem Fahrwagen können auch Manipulatoren oder Spüldüsen bzw. Spülköpfe angeordnet sein.

Die Inspektions- und/oder Wartungseinheit 10 kann aber auch als Schiebesystem ausgestaltet sein, das mit Hilfe eines Schiebeaals in den Kanal K geschoben werden kann.

Unabhängig davon, ob die Inspektions- und/oder Wartungseinheit 10 als Fahrwagensystem oder als Schiebesystem ausgestaltet ist, weist die Inspektions- und/oder Wartungseinheit 10 eine oder mehrere Kamerasysteme 15', 15" auf, die als hochauflösende Videokameras ausgestaltet sein können. Bei der in Fig. 1 gezeigten Inspektions- und/oder Wartungseinheit 10 ist das Kamerasystem 15' als eine nach hinten gerichtet Kamera und das Kamerasystem 15" als eine nach vorne gerichtete Kamera ausgestaltet. Damit können während einer Kanalinspektion gleichzeitig sowohl der hintere als auch der vordere Abschnitt des Kanals beobachtet werden. Es ist auch möglich mehr als zwei Kamerasysteme vorzusehen, wobei es die vorliegende Erfindung ermöglicht, die von den mehreren Kamerasystemen aufgenommenen Bilder, insbesondere hochaufgelöste Videos gleichzeitig zu betrachten, da die von den mehreren Kamerasystemen aufgenommenen Videos parallel an eine Steuer- und/oder Anzeigeeinheit 20 übertragen werden können.

Die sich im Kanal K befindliche Inspektions- und/oder Wartungseinheit 10 ist über ein Kabel 30 operativ mit der außerhalb des Kanals angeordneten Steuer- und/oder Anzeigeeinheit 20 gekoppelt, wobei das Kabel 30 über einen Schacht S aus dem Kanal K herausgeführt ist.

Über das Kabel 30 wird die Übertragung der Bilddaten bzw. Videodaten abgewickelt. Ferner können über dieses Kabel 30 auch die von den Sensoren 17 bereitgestellten Sensordaten übertragen werden.

Umgekehrt können über das Kabel 30 auch Steuerdaten, Kontrolldaten oder sonstige Daten von der Steuer- und/oder Anzeigeeinheit 20 an die Inspektions- und/oder Wartungseinheit 10 übertragen werden.

Die Übertragung der Daten zwischen der Steuer- und/oder Anzeigeeinheit 20 und der Inspektions- und/oder Wartungseinheit 10 kann im Vollduplexverfahren erfolgen.

Erfindungsgemäß handelt es sich bei dem Kabel 30 um ein Kupferleitungen aufweisendes Twisted-Pair-Kabel. Damit können Datenkabel für die Verwendung in Kanalinspektions- und/oder Wartungssystemen besonders günstig bereitgestellt werden. Zudem sind solche Kabel im Gegensatz zu Glasfaserkabel oder Koaxialkabel einfach zu reparieren. Ein weiterer Vorteil solcher Kabel gegenüber Glasfaserkabel und Koaxialkabel ist das geringere Gewicht, was sich insbesondere dann bemerkbar macht, wenn lange Kanalabschnitte inspiziert oder gewartet werden müssen.

Die Inspektions- und/oder Wartungseinheit 10 weist eine Verarbeitungseinheit 16 auf, die einen digitalen Signalprozessor (DSP) oder eine anwendungsspezifische integrierte Schaltung (ASIC) umfasst. Die Verarbeitungseinheit 16 ist einerseits operativ mit den Kamerasystemen 15', 15" und/oder mit den Sensoreinrichtungen 17 gekoppelt. Andererseits ist die Inspektions- und/oder Wartungseinheit 10 operativ mit dem Kabel 30 bzw. über das Kabel 30 operativ mit der Steuer- und/oder Anzeigeeinheit 20 gekoppelt.

Die Verarbeitungseinheit 16 nimmt die Bilddaten der Kamerasysteme zur weiteren Verarbeitung entgegen. Falls die Bilder bzw. Videos von den Kamerasystemen als analoge Signale bereitgestellt werden, wandelt die Verarbeitungseinheit 16 diese Signale in digitale Bilddaten bzw. digitale Videodaten um. Ferner kann die Verarbeitungseinheit 16 die digitalen Bilddaten / Videodaten komprimieren, wofür an sich bekannte Komprimierverfahren verwendet werden können.

Die von den Sensoreinrichtungen 17 bereitgestellten Sensorsignale werden gegebenenfalls ebenfalls digitalisiert und komprimiert, sodass für die Übertragung digitale und komprimierte Sensordaten zu Verfügung stehen. Abhängig von der Datenmenge der Sensordaten kann auf eine Komprimierung der Sensordaten auch verzichtet werden.

Bevor die digitalen und komprimierten Bilddaten (und ggf. die digitalen Sensordaten) über das Kabel 30 an die Steuer- und/oder Anzeigeeinheit 20 übertragen werden, werden sie so aufbereitet, dass sie gemäß dem BroadR-Reach-Standard über das Kabel 30 übertragen werden können. Das bedeutet, dass die Daten (Bilddaten und/oder Sensordaten) so aufbereitet werden, dass sie als Datenpakete übertragen werden, sodass die Datenpakete nach der Übertragung von den Empfänger (d.h. von der Steuer- und/oder Anzeigeeinheit 20) wieder korrekt zusammengesetzt werden können. Gegebenenfalls, d.h. bei mehreren gleichzeitig zu übertragenden Bildern bzw. Videos und/oder Sensordaten, muss jedem Datenpaket eine eindeutige Kennung hinzugefügt werden. Der Empfänger kann dann anhand dieser Kennung die Datenpakete dem jeweiligen Bild, Video bzw. Sensordatum zuordnen.

Nach der Aufbereitung der Daten (Bilddaten und/oder Sensordaten) werden die entsprechenden Datenpakete gemäß dem BroadR-Reach-Standard über das Kabel 30 an die Steuer- und/oder Anzeigeeinheit 20 übertragen. Die Steuer- und/oder Anzeigeeinheit 20 weist eine Sende-/Empfangseinheit 26 auf, die operativ mit dem Kabel 30 gekoppelt ist. Die Sende-/Empfangseinheit 26 kann ihrerseits ebenfalls einen digitalen Signalprozessor (DSP) oder eine anwendungsspezifische integrierte Schaltung (ASIC) umfassen und angepasst sein, die über das Kabel 30 übertragenen Daten nach dem BroadR-Reach-Standard zu empfangen. Die Sende-/Empfangseinheit 26 bereitet die empfangen Datenpakete dann so auf, dass sich daraus wieder die Bilddaten, Videodaten bzw. Sensordaten ergeben, die dann gegebenenfalls dekomprimiert werden.

Die Videodaten können von der Verarbeitungseinheit 16 der Inspektions- und/oder Wartungseinheit 10 in Form eines sogenannten Videostreams übertragen werden, sodass dem Benutzer des Systems ein Livebild der entsprechenden Kamera zur Verfügung steht. Die Steuer- und/oder Anzeigeeinheit 20 kann in diesem Fall die empfangen Datenpakete der Videodaten so aufbereiten, dass sie ebenfalls einen Videostream zur Ausgabe an einem Bildschirm bereitstellt.

Mit der vorliegenden Erfindung, bei der digitale Daten mittels des BroadR-Reach-Standards über ein Kupferleitungen aufweisendes Twisted-Pair-Kabel übertragen werden, können einerseits sehr große Bandbreiten erreicht werden, wie sie für die gleichzeitige Übertragung mehrere hochauflösender Videos notwendig sind, und andererseits können die Kosten für das Übertragungssystem gering gehalten werden. Ein sogenannter Live-View eines Kanalabschnittes aus mehreren Perspektiven ist so möglich.

Ferner hat sich gezeigt, dass die Kupferleitungen aufweisenden Twisted-Pair-Kabel einem relativ hohen Verschleiß unterliegen können, ohne dass es zu Beeinträchtigungen in der Datenübertragung kommt. Das bedeutet, dass Kabel deutlich länger genutzt werden können, bevor sie ausgetauscht werden müssen, was einerseits die Kosten verringert und andererseits die für den Kabelaustausch notwendigen Rüstzeiten bzw. Stillstandzeiten reduziert.

Ein weiterer wichtiger Vorteil der vorliegenden Erfindung liegt darin, dass das Gewicht des Kabels im Vergleich zu Glasfaserkabel und Koaxialkabel erheblich reduziert werden kann, was wiederum dazu führt, dass deutlich längere Kanalabschnitte etwa mit einem Fahrwagen befahren werden können, bevor ein Umsetzen des Systems zum nächsten Kanalschacht erfolgen muss. Eine Inspektion bzw. Wartung eines Kanals kann so erheblich effizienter durchgeführt werden.

### Bezugszeichen:

- 10: Inspektions- und/oder Wartungseinheit
- 15', 15": Kamerasysteme
- 16: Verarbeitungseinheit
- 17: Sensoren
- 20: Steuer- und/oder Anzeigeeinheit
- 26: Sende-/Empfangseinheit
- 30: Kabel (ein Kupferleitungen aufweisendes Twisted-Pair-Kabel)
- K: Kanal
- S: Schacht

## Patentansprüche

1. Kanalinspektions- und/oder Wartungssystem mit einer Inspektions- und/oder Wartungseinheit (10) und einer Steuer- und/oder Anzeigeeinheit (20), wobei
- die Steuer- und/oder Anzeigeeinheit (20) über ein Kupferleitungen aufweisendes Twisted-Pair-Kabel (30) operativ mit der Inspektions- und/oder Wartungseinheit (10) gekoppelt ist,
- die Inspektions- und/oder Wartungseinheit (10) eine Bildaufhahmeeinheit (15) aufweist, die operativ mit einer einen digitalen Signalprozessor (DSP) oder eine anwendungsspezifische integrierte Schaltung (ASIC) aufweisenden Verarbeitungseinheit (16) der Inspektions- und/oder Wartungseinheit (10) gekoppelt ist,
- die Verarbeitungseinheit (16) operativ mit dem Twisted-Pair-Kabel (30) gekoppelt ist, und
- die Verarbeitungseinheit (16) angepasst ist
- die von der Bildaufnahmeeinheit (15) empfangenen Bilddaten gegebenenfalls zu digitalisieren und zu komprimieren,
- die digitalisierten und komprimierten Bilddaten für eine Übertragung nach dem BroadR-Reach-Standard aufzubereiten, und
- die aufbereiteten Bilddaten nach dem BroadR-Reach-Standard über das Twisted-Pair-Kabel (30) an die Steuer- und/oder Anzeigeeinheit (20) zu übertragen.

2. Kanalinspektions- und/oder Wartungssystem nach dem vorhergehenden Anspruch, wobei die Bildaufnahmeeinheit (15) eine Anzahl von Bildaufnahmeeinrichtungen (15', 15") aufweist, die jeweils operativ mit der Verarbeitungseinheit (16) gekoppelt sind, und wobei die Verarbeitungseinheit (16) angepasst ist
- die von der Anzahl von Bildaufnahmeeinrichtungen (15', 15") empfangenen Bilddaten parallel oder quasiparallel zu digitalisieren und zu komprimieren und für eine Übertragung nach dem BroadR-Reach-Standard aufzubereiten, und
- die aufbereiteten Bilddaten der Anzahl von Bildaufnahmeeinrichtungen (15', 15") nach dem BroadR-Reach-Standard parallel über das Twisted-Pair-Kabel (30) an die Steuer- und/oder Anzeigeeinheit (20) zu übertragen.

3. Kanalinspektions- und/oder Wartungssystem nach einem der vorhergehenden Ansprüche, wobei die Inspektions- und/oder Wartungseinheit (10) zumindest eine Sensoreinheit (17) aufweist, die operativ mit der Verarbeitungseinheit (16) gekoppelt ist und wobei die Verarbeitungseinheit (16) angepasst ist, die Sensordaten für eine Übertragung nach dem BroadR-Reach-Standard aufzubereiten und die aufbereiteten Sensordaten nach dem BroadR-Reach-Standard über das Twisted-Pair-Kabel (30) an die Steuer- und/oder Anzeigeeinheit (20) zu übertragen.

4. Kanalinspektions- und/oder Wartungssystem nach dem vorhergehenden Anspruch, wobei die Verarbeitungseinheit (16) angepasst ist, die aufbereiteten Sensordaten parallel zu den Bilddaten an die Steuer- und/oder Anzeigeeinheit (20) zu übertragen.

5. Kanalinspektions- und/oder Wartungssystem nach einem der vorhergehenden Ansprüche, wobei die Steuer- und/oder Anzeigeeinheit (20) eine einen digitalen Signalprozessor (DSP) oder eine anwendungsspezifische integrierte Schaltung (ASIC) aufweisende Sende-/Empfangseinheit (26) aufweist, die operativ mit dem Twisted-Pair-Kabel (30) gekoppelt ist und wobei die Sende-/Empfangseinheit (26) angepasst ist, Daten, insbesondere Steuer- und/oder Kontrolldaten nach dem BroadR-Reach-Standard über das Twisted-Pair-Kabel (30) an die Verarbeitungseinheit (16) zu übertragen.

6. Kanalinspektions- und/oder Wartungssystem nach dem vorhergehenden Anspruch, wobei die Sende-/Empfangseinheit (26), die Verarbeitungseinheit (16) und das Twisted-Pair-Kabel (30) angepasst sind Daten im Vollduplexbetrieb zu übertragen.

7. Kanalinspektions- und/oder Wartungssystem nach einem der vorhergehenden Ansprüche, wobei die Bildaufiiahmeeinrichtungen (15', 15") zumindest eine HD-Kamera zur Aufnahme hochaufgelöster Videobilder umfassen.

8. Kanalinspektions- und/oder Wartungssystem nach einem der vorhergehenden Ansprüche, wobei die Inspektions- und/oder Wartungseinheit (10) einen Fahrwagen und/oder ein Schiebesystem umfasst.
